Europäisches Patentamt

European Patent Office

Office européen des brevets

(11) Publication number: **0 209 627**
**A2**

(12) **EUROPEAN PATENT APPLICATION**

(21) Application number: 85308195.8

(51) Int.Cl.⁴: **A 01 G 7/00**

(22) Date of filing: 11.11.85

(30) Priority: 16.07.85 US 755943

(43) Date of publication of application:
28.01.87 Bulletin 87/5

(84) Designated Contracting States:
AT BE CH DE FR GB IT LI LU NL SE

(71) Applicant: N.P.I.
417, Wakara Way
Salt Lake City Utah 84101(US)

(72) Inventor: Wood, Timothy
1200, Lake Street
Salt Lake City Utah 84105(US)

(72) Inventor: Biermann, Brenda
309, Creeksedge Road
Chapel Hill North Carolina 27514(US)

(72) Inventor: Grainger, Holly
622, South Elizabeth Street
Salt Lake City Utah 84102(US)

(74) Representative: Goldin, Douglas Michael et al,
J.A. KEMP & CO. 14, South Square Gray's Inn
London WC1R 5EU(GB)

(54) Method for producing axenic vesicular arbuscular mycorrhizal fungi in association with root organ cultures.

(57) A process for the production of vesicular arbuscular mycorrhizal fungi e.g. of the genus *Glomus* or *Gigaspora*, in association with plant root organ cultures e.g. from a herbaceous plant using a porous medium comprising a porous substrate and a nutrient solution. The resulting root organ culture may be inoculated into whole plants. A new nutrient solution for the root organ cultures is also described.

EP 0 209 627 A2

## METHOD FOR PRODUCING AXENIC VESICULAR - ARBUSCULAR MYCORRHIZAL FUNGI IN ASSOCIATION WITH ROOT ORGAN CULTURES

### FIELD OF THE INVENTION

The present invention deals with the production of mycorrhizal fungi. More specifically, the invention described and claimed herein relates to a process for growing axenic vesicular-arbuscular mycorrhizal fungi in association with root organ cultures produced in porous substrates wetted with nutrient solutions.

### BACKGROUND OF THE INVENTION

The publications and other materials used herein to illuminate the background of the invention are incorporated herein by reference and for convenience are numerically referenced in the following text and respectively grouped in the appended bibliography.

Mycorrhizas are symbiotic associations between beneficial soil fungi and the roots of higher plants (1,2). The fungi colonize plant roots, extend their hyphae (thread-like filaments) into surrounding soils and form a fundamentally important linkage between the plant and its belowground environment. The fungus obtains from its host nutrient compounds that are required for growth. The plant in turn benefits from the association through improved uptake of phosphorus, trace metals and other sparingly soluble nutrients (3,4), enhanced resistance to many root pathogens (5,6) and generally 20-200% greater growth, yield and survival (7,8). Approximately 98% of all higher plants form mycorrhizas and most require the association for optimal performance.

The fungi involved in mycorrhizal associations are termed mycorrhizal fungi. Several groups of these organisms have been delineated. The most widespread group comprises vesicular-arbuscular mycorrhizal (hereinafter "VAM") fungi. These organisms have extremely broad host ranges. They associate with 90-95% of all higher plant species including most agricultural and horticultural crops and many valuable tree species (3,7,8).

VAM fungi not only colonize root tissues but also penetrate and form intimate relationships with root cells. The nature of those relationships is not fully understood, but it is known that VAM fungi are obligate symbionts that require a host plant for growth and development (9). They have not been cultured in the absence of a host. The invention described herein refers only to vesicular-arbuscular mycorrhizal fungi.

VAM fungi hold considerable potential for use in agriculture, forestry, reclamation, and horticulture, because of their ability to markedly improve the growth, yield and survival of many commercially important plants (7,8).

Despite this potential, VAM fungi have not been broadly commercialized because of technical difficulties in inoculum production. Three techniques for culturing VAM fungi have been developed, but all are subject to problems which hamper efficient production of inoculum in commercial quantities. The first technique, termed pot culture, involves production of the fungus on plant roots in open pots of soil in greenhouses (10). Pot cultures have been produced commercially, but they frequently become contaminated with plant pathogens which render the inoculum unusable. A second method employs a nutrient film technique (hydroponics) to produce the fungus on the roots of intact plants whose roots are bathed in a soil-less, nutrient solution. Again, however, production is accomplished in a greenhouse, and the inoculum is subject to contamination.

A third production technique which minimizes the contamination problem involves growth of the fungus on axenic (i.e. free from contamination) root organ cultures grown on sterile liquid or solid agar substrates (12,13,14). This technique presents substantial barriers to commercial scale-up on a cost effective basis. These difficulties manifest themselves in at least three ways. First, these dual-member cultures are relatively slow to develop and their long generation times (3-8 weeks from inoculation to harvest) limit the use of capital intensive, large scale fermentation equipment for production. Second, development of axenic mycorrhizas in large volumes of liquid is hindered by poor aeration. Oxygenation can be improved by agitation or injection of air, but the turbulence associated with these processes disturbs the contact between fungus and root that is necessary for colonization and eventual growth of the fungus. Third, the use of solid agar substrates is both prohibitively expensive and also subject to problems of poor aeration.

Porous substrates, including vermiculite and various grains have been used as media components to overcome aeration and turbulence problems in bulk cultures in the production of saprophytic fungi, i.e. fungi that do not require a living host (15). Suitable media, however, have not been developed for co-culture of VAM fungi and tissue cultured roots.

## SUMMARY OF THE INVENTION

The present invention provides processes for growth and production of commercial quantities of contaminant free VAM fungal inoculum. The invention is applicable to a wide variety of plant and fungal species. The invention utilizes plant roots grown in axenic root organ culture as hosts for the fungus. It employs porous substrates, as opposed to liquid or agar substrates to improve fungal growth and sporulation and to allow for economic inoculum production. Embodiments of this invention use a medium comprising porous substrates such as vermiculite wetted with nutrient solution for the development of axenic VAM fungi. The porous substrates allow for good diffusion of oxygen thus providing aeration throughout the culture without the agitation that hinders VAM fungal development. As a result of this invention, superior performance in the growth and development of axenic mycorrhizal root organ cultures has been developed. Because the porous substrates of the invention are relatively inexpensive and easily manipulatable, this system is amenable to production of VAM fungal inoculum in commercial quantities.

## BRIEF SUMMARY OF THE DRAWINGS

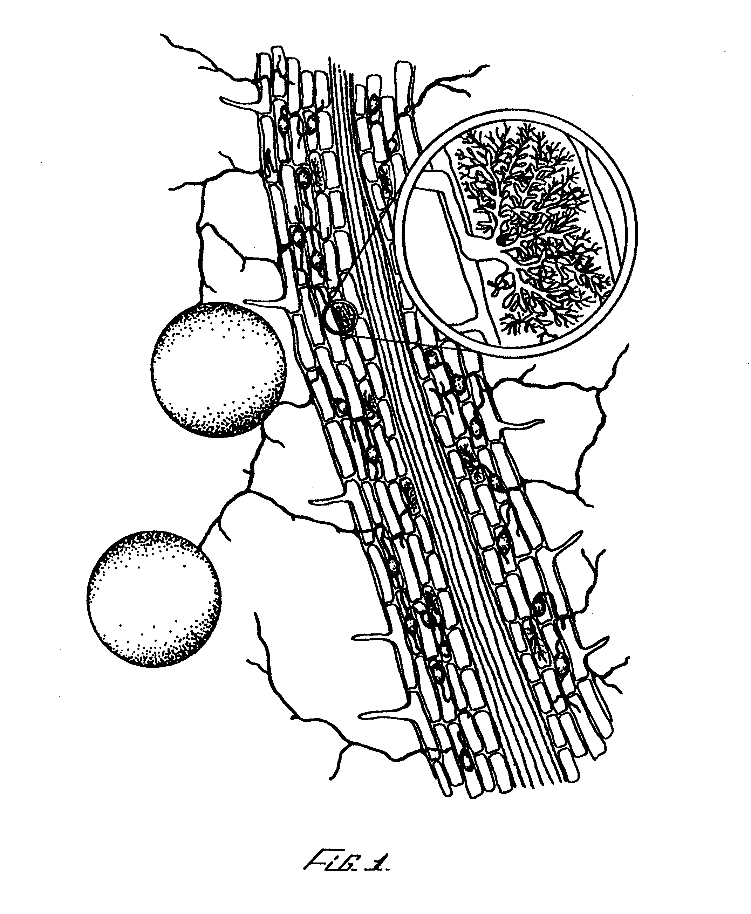

Figure 1. Schematic of a VA mycorrhizal association showing VAM fungal hyphae, arbuscules, vesicles and spores in association with a plant root (shown in longitudinal section).

Figure 2. Flow chart of the process of this invention for producing axenic VAM fungal inoculum in association with tissue cultured roots in containers holding porous nutrient media.

### DETAILED DESCRIPTION OF THE INVENTION

THE FOLLOWING DEFINITIONS ARE USED HEREIN:

STERILE — Free from living organisms

AXENIC — Free from unwanted living organisms

INOCULUM — A portion of living tissue of a plant and/or micro-organism that is used to transfer or initiate new growth of said plant and/or microorganism.

INOCULATION — The transfer or reinitiation of growth of an organism on a new host or medium using an inoculum.

SUBSTRATE — A solid phase matrix

MEDIUM — A nutrient support system comprising a substrate and a nutrient solution used for the cultivation of living organisms or tissues thereof.

This invention deals with improved media and methods for the culture of axenic VAM fungi in association with plant root organ cultures.

Root organ culture is a method of growing axenic, intact plant roots, without shoots, in a nutrient medium. The roots of many species of plants can be cultured (16). Trifolium incarnatum (crimson clover) and Arachis hypogaea (peanut) are suitable for use in this invention. A general review of root organ culture methodology is given in (16).

Root organ cultures used in this invention may be initiated from tips of axenic radicles of surface sterilized seeds or from the tips of adventitious roots produced from excised stem segments of axenic seedlings. Root organ cultures

of *Trifolium* *incarnatum*, for example, are readily initiated from radicles while those of *Arachis* *hypogaea* are more easily initiated from adventitious roots. Cultures are preferably established by excising 1.0-2.0 centimeter (cm) long root tip sections and incubating them on a tissue culture medium specific for the plant species (Tables 1 and 2). Clones of these root materials are maintained through successive subculturing at 14-17 day intervals using standard techniques (16).

VAM fungi are introduced to the root organ culture system as surface sterilized pregerminated spores. Surface sterilization is accomplished using methods described by Tommerup and Kidby (17). Pregermination is accomplished in a small volume of sterile nutrient solution such as a peptone-yeast extract medium (Table 3) that supports spore germination. Depending on the fungal species, the spores are monitored for varying lengths of time to ensure germination and lack of contamination. VAM fungi which can be used in this invention include species of the genera *Glomus* and *Gigaspora*. Specific examples are *Glomus* *etunicatum*, *Glomus* *mosseae*, *Glomus* *intraradicies*, and *Gigaspora* *margarita*.

In the present invention, root organ cultures and VAM spore inocula are introduced onto a porous medium that supports development of axenic VAM symbioses. Many relatively inert, coarse particulate substrates are suitable for use in this medium. Suitable substrates include but are not limited to coarse vermiculite, perlite, coarse quartz sand, granular montmorillenite clay preparations such a Turface (a registered trademark of International Minerals and Chemicals), peat and mixtures of these substances. The major criterion for selection of these substrates is porosity. The substrates must have large pore spaces to allow for free gas diffusion and to ensure good aeration. Other criteria used for selection of substrates are wettablity and inertness; the substrates must absorb and/or adsorb liquid to ensure proper moisture distribution, but must not markedly alter the chemical composition of the nutrient solution. Unlike prior substrates used for the development of axenic vesicular-arbuscular mycorrhizas, porous substrates permit free gas exchange without agitation. This, in turn, favors rapid colonization of the plant root by the VAM fungus, profuse VAM sporulation and good root growth.

In the practice of the present invention, the porous substrates are dispensed by volume or weight into appropriate culture vessels, which may be petri dishes, flasks or plastic bags, and are sterilized.

Nutrient solutions used to wet the porous substrates are prepared using standard techniques. Solutions are selected for compatibility with the plant and fungal species employed. For cultures involving Glomus and Gigaspora species in association with Trifolium incarnatum roots, nutrient solutions modified from that of White (18) containing relatively low concentrations of salt (MW1, MW2, MW3; Table 2) are preferable. For cultures involving the same fungi in association with Arachis hypogaea roots, however, a relatively high salt solution modified from that of Murashige and Skoog (19) (MS3; Table 1) is preferred. Nutrient solutions for use with Glomus spp. are preferably buffered at pH 6.5 and for Gigaspora maragarita at pH 5.5-6.5.

Following preparation, the nutrient solution is preferably filter sterilized and then dispensed by volume into the sterile vessels containing the porous substrates. Suitable substrate-to-nutrient-solution ratios for use with this invention are given in Table 4. The amount of solution added need be sufficient to thoroughly wet the substrate and leave only a thin layer of liquid on the bottom of the container. Excessive wetting of the porous substrate which reduces aeration should be avoided.

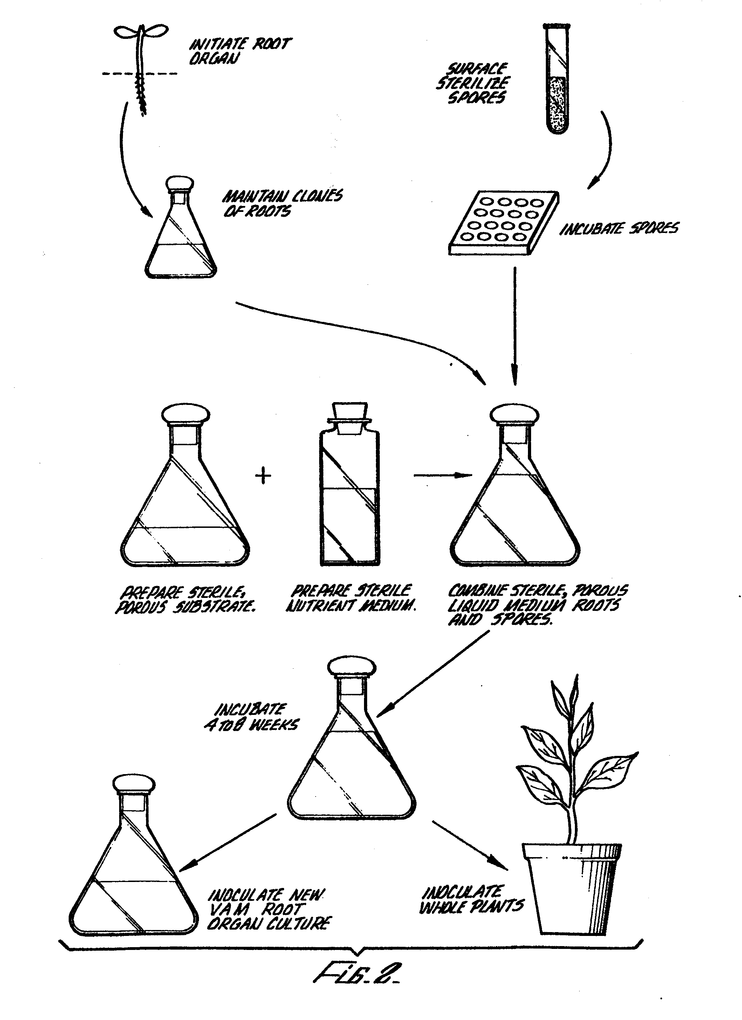

Once prepared, the porous medium is inoculated first with root tissue and, next, with a VAM fungus (FIG. 2). Appropriate root inocula vary between plant species. Trifolium incarnatum cultures, for example, are preferably inoculated with from one to several radicles excised from freshly germinated seeds, or with from one to several clumps of cloned roots carrying 30-50 lateral tips per clump. Arachis hypogaea cultures, on the other hand are preferably inoculated with cloned root tips carrying from five to ten lateral roots. The root material is placed on top of or is layered within the porous medium and the culture and is preferably incubated until the roots begin to grow and branch. Following this incubation period, the culture is inoculated with surface sterilized, pregerminated spores of the selected VAM fungus. The spores are transferred to the culture in a small volume of the aforesaid spore germination medium. Immediate contact between spores and roots is not necessary for colonization.

Culture containers are sealed loosely to allow gas exchange while preventing contamination and rapid dessication. The cultures are incubated in the dark at an appropriate temperature, preferably between 25° and 28° Celsius.

After four to eight weeks, cultures are assessed for VAM fungal growth and development by measuring the degree to which the root system has been colonized by the fungus and the degree to which the fungus has sporulated. Significant levels of colonization (20%-50%) and/or sporulation indicate that the culture is developing well.

VAM root organ cultures thus produced may be used as inoculum to initiate new axenic VAM root organ cultures. Whole VAM root organ culture material, comprising colonized roots, extramatrical hyphae, spores and substrate is harvested by sterile technique and layered within fresh, sterile, porous medium. It is then overlaid with fresh root cultures. As the roots grow and pass through the whole inoculum, they become colonized and thus perpetuate the culture.

Alternatively, the VAM root organ cultures may be used to inoculate agronomic plants and horticultural crops, such as Sorghum vulgare, Medicago sativa and Arachis hypogaea. Whole VAM root organ culture material comprising substrate, roots, extramatrical hyphae and spores is washed with water to remove surplus nutrients, principally sugars and salts. The inoculum may then be layered beneath seed, transplants, microshoots or cuttings in a fashion that will ensure contact with developing roots. Such contact facilitates VAM colonization of the inoculated plant. Inoculations can be conducted in the greenhouse or field. For consistent VAM colonization plants are maintained in a slightly phosphorus deficient state.

The following examples are presented solely to illustrate this invention and are not intended to limit the scope thereof.

## EXAMPLE 1

Comparison of VAM colonization of Trifolium incarnatum Root Organ Cultures by Gigaspora margarita in Liquid, Agar and Porous Media.

### Preparation of Root Organ Culture:

Seed of Trifolium incarnatum was surface sterilized in concentrated sulfuric acid for 15 minutes and rinsed thoroughly with five changes of sterile distilled water. Seed was tested for sterility by incubation at 28°C on MS I medium (Table 1) with 1% agar (Difco Bacto Agar) and 3% sucrose (pH 5.8) for 3 days. During that period, the seed germinated. Root organ cultures were established by excising ten 1-2 cm long radicle tips and incubating them together in 50 ml of MW 1 solution (Table 2) (pH 5.7) in liquid shake culture. Fast growing, rapidly branching roots were selected from the initial population of tips and were cloned using standard techniques (16). Stock cultures were maintained in liquid shake culture in 125 ml Erlenmeyer flasks containing 50 ml of the MW 1 solution described above. Cloned roots were subcultured at 14-17 day intervals.

### Preparation of Fungal Spores:

The spores of the VAM fungus Gigaspora margarita were surface sterilized using the methods described by Tommerup and Kidby, (17). Surface sterilized spores were then pregerminated in multiwell tissue culture plates containing 0.5 ml per well of a sterile liquid peptone-yeast extract solution (Table 3). Five to ten surface sterilized spores were incubated per well. The spores were monitored for germination and contamination over a five to seven day period.

Inoculation of Substrate With Roots and Fungal Spores.

Petri dishes (8 cm in diameter x 2 cm deep) containing filter sterilized nutrient solution (MW I, pH 6.5, Table 2) with liquid, agar (10g Difco Bacto-agar/liter), pr porous (vermiculite, 100%; vermiculite and peat, 95.5, v/v) substrates were prepared. The liquid and agar substrates were used for comparison purposes. Plates, 10 per treatment, were inoculated with clumps of cloned Trifolium incarnatum roots carrying 30-50 lateral tips per clump and with 15-20 surface-sterilized, pregerminated spores of Gigaspora margarita. The root material was placed on top of the porous substrates. The plates were sealed with two layers of parafilm and then incubated in the dark at 28°C. To enhance aeration, the liquid cultures were shaken continuously at 60 rpm. After 4 weeks the cultures were harvested and analyzed.

Assessment of Culture Development

Culture development was assessed in several ways. Root growth was measured on a fresh weight basis following blotting of roots between herbarium blotters for 15 minutes.

The degree of VAM colonization was determined following clearing of fresh roots in 10% KOH at 80°C for 4 hours and subsequently at room temperature overnight. Roots were then rinsed with tap water, acidified in 1% HCl, stained in 0.05% trypan blue dissolved in lactoglycerol (lactic acid, glycerol, water; 1:1:1; v/v/v), and then allowed to destain in lactoglycerol overnight using the procedures of Kormanik and McGraw (20). Following these procedures, those portions of the root network that were colonized by the VAM fungus were clearly distinguished by the blue stain. For samples in the early stages of VAM development, when individual colonization points were · distinct, numbers of VAM infections were determined by dispersing the cleared and stained roots in a petri dish and systematically counting the number of infection units. Per cent VAM colonization of the root culture, on a root length basis, was determined using the grid intercept method (21).

An index of sporulation was obtained for cultures in petri dishes by systematically counting the numbers of spores visible through the bottom of the dish.

Spore viability was assessed by transferring, under sterile conditions, the spores formed in the root organ cultures to fresh petri plates containing sterile water agar or peptone-yeast extract agar, incubating at 28°C and checking for spore germination after 7, 14 and 21 days.

The results in Table 5 show that while root growth was comparable between treatments, VAM development in the porous media was superior to that in liquid or agar. Numbers of VAM infections per culture were significantly higher in the vermiculite and vermiculite peat cultures than in liquid or agar. Per cent colonization was dramatically increased through use of the porous media. Moreover, the frequency among cultures in VAM colonization and sporulation was enhanced. Virtually all cultures produced in the vermiculite substrates became colonized and sporulated. Of the 50 newly formed spores that were transferred to fresh media, 24 (48%) germinated within 21 days, indicating good spore viability.

## EXAMPLE II

VAM colonization of _Trifolium incarnatum_ root organ cultures by _Gigaspora margarita_ in vermiculite substrates wetted with different nutrient solutions.

Petri dishes (8 cm in diameter and 2 cm deep) containing 5.0 g of sterile vermiculite were wetted with 28 ml of filter sterilized nutrient solution. Twelve modifications of the MS3 salts solution (Table 1) were tested to determine the effects of nutrient solution strength and relative nitrogen content on VAM colonization. MS3 salts were tested at 0.2, 0.5, 1.0 and 2.0 times their normal concentration (Table 1), and at each solution strength nitrogen concentrations were adjusted to 1.0, 2.0 and 3.0 times (1x, 2x, 3x) their respective levels. The formulation for 0.5 strength MS3 with 3 times its respective nitrogen is given as MS4 in Table 1. For all treatments, vitamins, sucrose and pH were as given in Table 1. Ten plates per treatment were prepared.

Plates were inoculated with one section of _Trifolium incarnatum_ root organ culture and with from 10-20 surface sterilized, pregerminated spores of _Gigaspora margarita_. As before, plates were sealed with parafilm and incubated in the dark at 28°. After seven weeks the cultures were harvested and analyzed.

Results (Table 6) show that nutrient solution composition significantly influenced the growth and VAM colonization of the _Trifolium incarnatum_ root organ cultures. Root fresh weights increased 3-4 fold as MS3 salt concentrations were raised from 0.2 to 1.0 strength. With further increases in salts, root growth tended to level off especially at nitrogen concentrations which were two times (2x) and three times (3x) the normal level of nitrogen (1x).

At normal (1x) levels of nitrogen, percent VAM colonization declined from 13.3% to 1.8% as MS3 salt concentrations were raised from 0.2 to 2.0 strength. However, when nitrogen levels were increased, significant peaks of 21.1% and 32.0% colonization occurred with 0.5 strength MS3 salts with 2x and 3x nitrogen, respectively.

Similar responses occurred with sporulation. At normal (1x) levels of nitrogen, sporulation declined from 32 to 4 spores/ plate as MS3 salt concentrations were raised from 0.2 to 2.0 strength. Again, when nitrogen levels were increased, significant peaks of 73 to 83 spores per plate occurred with 0.5 strength MS3 salts with 3x and 2x nitrogen respectively.

The superior performance of these cultures occurred in solutions with ionic strengths of 20-40 mM, with absolute phosphorous concentrations of 5-15 (mg/l), and with absolute nitrogen concentrations of 250-500 mg/l.


EXAMPLE III

Colonization of Arachis hypogaea root organ cultures by Gigaspora margarita in porous media.

Root organ cultures of Arachis hypogaea were initiated from axenic adventitious roots as follows. Arachis hypogaea seeds were surface sterilized by soaking in a 1.0% solution of sodium hypochlorite containing 0.05% Tween 20 for 15 minutes with agitation and under vacuum. They were then rinsed five times with successive changes of sterile distilled water. Seed was tested for sterility as before. Sterile seedlings were grown from axenic seed in sterile 500 ml jars containing 100 ml of MS 1

medium with 1% agar (Difco) and no sucrose (pH 5.8). Axenic adventitious roots were produced by excising 1.0 - 2.0 cm long stem segments from the seedlings thus produced and sticking those segments basal end up half way into 1% water agar (10 grams (Difco) agar in one liter of distilled water) in a sterile container and incubating for 2-4 weeks. When adventitious roots had been produced, 1-2 cm long tip sections were excised and cultured in petri dishes on MS 2 medium (Table 1) with 1% agar, pH 5.7. Stock cultures were maintained on the same medium in petri dishes with subculturing at 14 day intervals.

Petri dishes (8 cm in diameter x 2 cm deep) containing 5.0 g of sterile vermiculite (100%) wetted with 28 ml of a filter sterilized modified Murashige and Skoog nutrient solution (MS3 of Table 1) were prepared as described. Plates, 10 per treatment, were inoculated with cloned segments of Arachis hypogaea roots and 10-20 surface sterilized pregerminated spores of Gigaspora margarita. They were sealed with one wrap of parafilm and incubated at 28°C in the dark. After 4 weeks the cultures were harvested and analyzed.

Per cent colonization and number of infections per culture could not be determined, because the cortical cells of the A. hypogaea roots tended to slough off during the clearing and staining process.

Nevertheless, the roots grew well (fresh weights averaged 2009 ± 236 mg after four weeks), all cultures showed significant proliferation of extramatrical hyphae (indicating that colonization had taken place) and 50% of the cultures showed sporulation of the VAM fungus.

## EXAMPLE IV

Use of VAM Root Organ Cultures as Inocula to Initiate
Subsequent VAM Root Organ Cultures.

Trifolium incarnatum - Gigaspora margarita VAM root
organ cultures produced in porous substrates were used as
inoculum to initiate subsequent axenic VAM root organ cultures in
new Trifolium incarnatum roots. This transfer illustrates a
process for subculturing and increasing the bulk of axenic VAM
root organ cultures.

Five Fernbach flasks (2600 ml) were each filled with 1.5
liters of sterile vermiculite wetted with 700 ml of a low-salt,
modified White's nutrient solution containing increased nitrogen
(MS2 of Table 2). Each flask was first inoculated with four
partially chopped and homogenized VAM root organ cultures of
Trifolium incarnatum roots colonized by Gigaspora margarita.
These inoculum cultures were produced in petri plates of
vermiculite amended with nutrient solution (MW2 of Table 2) as
described in Example II. Inoculum cultures were four weeks old
and showed good hyphal proliferation and sporulation. The
inoculum was placed in four distinct clumps embedded in the fresh
porous medium. Each flask was next inoculated with eight
sections of cloned Trifolium incarnatum roots. Roots were placed
over the VAM inoculum added previously. They were then covered
with a one centimeter thick layer of sterile, premoistened
vermiculite substrate. Flasks were closed with tight fitting
sterile cotton and gauze plugs, and capped with aluminum foil.
They were incubated in the dark at 28°C.

After 8 weeks, the cultures showed good hyphal development and sporulation. Per cent colonization for root samples taken from the five flasks averaged 26.1 ± 7.3%. Judging from the even distribution of hyphae and spores along the inside walls of the flasks, VAM colonization had spread throughout the cultures.

## EXAMPLE V

Production of VAM Root Organ Cultures in Four-Liter Plastic Containers with Porous Media.

Ten 4.0 liter polypropylene bags (autoclavable) were each filled with 2.0 liters of vermiculite wetted with 930 ml of a modified White's nutrient solution containing increased nitrogen (MS2 of Table 2). They were sealed with metal collars and foam plugs as described by Langlois and Fortin, (22) sterilized by autoclaving, allowed to cool, and then inoculated. VAM root organ culture material and fresh sections of cloned Trifolium incarnatum roots were applied as inocula as described in Example IV. Cultures were resealed and incubated in the dark at 28°C.

After eight weeks, the cultures showed good VAM development and sporulation. Percent colonization for root samples taken from the ten bags averaged 24.3 ± 11.6%, and spore densities averaged 1.7 spores/ml.

## EXAMPLE VI

Use of VAM root organ cultures to inoculate whole plants.

VA mycorrhizal root organ cultures (Trifolium incarnatum clones inoculated with Gigaspora margarita) which showed good hyphal proliferation and sporulation were harvested and used to inoculate Sorghum vulgare and Trifolium subterraneum seedlings growing in pots of soil in the greenhouse.  The inoculum cultures were produced in petri dishes containing vermiculite wetted with a modified White's nutrient solution (MW 2 of Table 2) using methods described in Example II.  Upon harvest these cultures were lightly chopped, thoroughly mixed, and then rinsed with tap water over a 45 um screen to remove excess sugars and salts.  The material was partially air dried to 60% moisture content, and then layered into 2.2 liter pots of sterile sandy loam soil. Fifty milliliters of inoculum per pot was placed in a layer 5 cm below the soil surface.  Twenty inoculated pots and twenty non-inoculated pots were prepared.  Half of the inoculated and non-inoculated pots were sown with surface sterilized Sorghum vulgare seed and half were sown with Trifolium subterraneum seed.  Pots were mulched with sterile quartz sand, and placed on a greenhouse bench under artificial lighting to extend photoperiod to 18 hour per day.  Plants were irrigated as needed with tap water and half strength Hoagland's solution (23) minus phosphorus on alternate waterings to maintain the phosphorous deficient status found to promote VAM colonization.  After eight weeks, plants were harvested and roots were analyzed for VAM colonization.

The S. vulgare roots averaged 34 ± 11% colonization and the T. subterraneum roots averaged 46 ± 8% colonization. Infections were typical of Gigaspora margarita.  Uninoculated control plants remained uncolonized.  The levels of infection obtained were comparable to those generally found when using whole pot culture inoculum.

## LITERATURE CITED

(1) Sanders, F.E., B. Mosse, and P.B. Tinker. 1975. Endomycorrhizas. Academic Press, New York, 626 pp.

(2) Marks, G.C. and T.T. Kozlowski. 1973. Ectomycorrhizae. Academic Press, New York, 444 pp.

(3) Gerdemann, J.S. 1968. Vesicular-arbuscular mycorrhiza and plant growth. Ann. Rev. Phytopath. 6: 397-418.

(4) Ross, J.P. and J.A. Harper. 1970. Effect of Endogone mycorrhiza on soybean yields. Phytopath. 60: 1552-1556.

(5) Schenck, N.C., R.A. Kinloch, and D.W. Dickson. 1975. Interaction of endomycorrhizal fungi and root-knot nematode on soybean. pp. 607-617. In F.E. Sanders, B. Mosse, and P.B. Tinker (eds.). Endomycorrhizas. Academic Press, New York.

(6) Schonbeck, F. 1978. Effect of endotrophic mycorrhiza on disease resistance of higher plants. Z. Pflanzenkr. Pflanzenschutz. 85: 191-196.

(7) Menge, J.A. 1981. Mycorrhiza agriculture technologies. pp. 383-424. In Background Papers for Innovative Biological Technologies for Lesser Developed Countries. U.S. Government Printing Office, Washington, D.C.

(8) Mosse, B. 1981. Vesicular-arbuscular Mycorrhiza Research for Tropical Agriculture. Hawaii Institute of Tropical Agriculture and Human Resources. Research Bulletin 194, 82 pp.

(9)     Hepper, C.M.  1984.  Isolation and culture of VA mycorrhizal (VAM) fungi.  pp. 95-112 In C.L. Powell and D.J. Bagyaraj.  VA Mycorrhiza.  CRC Press, Boca Raton, FL.

(10)    Menge, J.A.  1984.  Inoculum production.  pp. 187-203. In C.L. Powell and D.J. Bagyaraj.  VA Mycorrhiza.  CRC Press, Boca Raton, FL.

(11)    Mosse, et al.  U.S. Patent No. 4,294,037, 1981, Production of Mycorrhizal Fungi.

(12)    Mosse, B. and C. Hepper.  1975.  Vesicular-arbuscular mycorrhizal infections in root organ cultures. Physiological Plant Pathology 5: 215-223.

(13)    Miller-Wideman, M.A. and L.S. Watrud.  1984. Sporulation of Gigaspora margarita on root cultures of tomato.  Can. J.  Microbiol. 30: 642-646.

(14)    Mugnier, J., B. Jung, and J. Prioul.  1982.  Procede D'Obtention in vitro de Champignons Endomycorhizens a Vesicules et a Arbuscules.  Pending French Patent Application.  Rhone Poulenc S.A.  Centre de Recherches, Antony, France.

(15)    Maul, S. B., P. A. Lemke, W. L. Gerner and J. B. Yoder.  1980.  Method and Apparatus for Sterile Cultivation of Cells on Solid Substrates, U.S. Pat. No. 4,204,364.

(16)    Shabde-Moses, M. and T. Murashige.  1979.  Organ Culture p. 40-51, In R. Durbin (ed.), Nicotiana, Procedures for Experimental Use, U.S.D.A. Technical Bulletin 1586.

(17)    Tommerup, I.C. and K.K. Kidby.  1980.  Production of asceptic spores of vesicular-arbuscular endophytes and their viability after chemical and physical stress. Appl. Environ. Microbiol.  39: 1111-1119.

(18)   White, P.R.  1938.  Cultivation of excised roots of dicotyledonous plants.  Am. J. Bot. 25: 348-356.

(19)   Murashige, P. and F. Skoog.  1962.  A revised medium for rapid growth and bioassays with tobacco tissue cultures.  Physiol. Plant. 15: 473-497.

(20)   Kormanik, P.P. and A.C. McGraw.  1982.  Quantification of vesicular-arbuscular mycorrhizae in plant roots.  pp. 37-45.  In N.C. Schenck (ed.).  Methods and Principles of Mycorrhizal Research.  American Phytopathological Society, St. Paul, MN.

(21)   Giovanetti, M. and B. Mosse.  1980.  An Evaluation of Techniques for Measuring Vesicular Arbuscular Mycorrhizal Infection in Roots, New. Phytol., 84:489-500.

(22)   Langlois, C. G. and J. A. Fortin.  1982.  Mycorrhizal Development of Containerized Tree Seedlings, p. 183-202, COJFRC Symp. Proc. Canadian Forestry Service, J. B. Scarrat, C. Glerum and C. A. Plexman (eds), Saulte St. Marie, Ontario.

(23)   Hoagland, D.R. and D.I. Arnon.  1950.  The water-culture method for growing plants without soil.  Calif. Agric. Expt. Sta. Circ. 347, 32 pp.

Although this invention has been described with reference to particular applications, the principles involved are susceptible of other applications which will be apparent to persons skilled in the art.  The invention is, therefore, to be limited only as indicated by the scope of the claims appended hereto.

Table 1. Nutrient solutions used for root organ cultures.

| Compound | MSI[1]/ (mg/l) | MS2 (mg/l) | MS3 (mg/l) | MS4[2]/ (mg/l) |
|---|---|---|---|---|
| $NH_4NO_3$ | 1650 | 825 | 160 | 240 |
| $KNO_3$ | 1900 | 1900 | 1818 | 2727 |
| $CaCl_2.2H_2O$ | 440 | 880 | 220 | 110 |
| KCl | 0 | 350 | 0 | 0 |
| $KH_2PO_4$ | 170 | 170 | 84 | 42 |
| $MgSO_4.7H_2O$ | 370 | 370 | 185 | 92 |
| NaFeEDTA | 36.7 | 36.7 | 18.5 | 9.25 |
| $H_3BO_3$ | 6.2 | 12.4 | 3.1 | 1.55 |
| $MnSO_4.H_2O$ | 16.9 | 33.6 | 8.5 | 4.25 |
| $ZnSO_4.7H_2O$ | 8.6 | 21.0 | 4.3 | 2.15 |
| $CuSO_4.5H_2O$ | 0.025 | 0.05 | 0.012 | 0.006 |
| $Na_2MoO_4.2H_2O$ | 0.25 | 0.50 | 0.118 | 0.059 |
| KI | 0.83 | 1.66 | 0.42 | 0.21 |
| $CoSO_4.7H_2O$ | 0.025 | 0.05 | 0.012 | 0.006 |
| Pantothenate | 1.0 | 1.0 | --- | --- |
| Myo inositol | 100.0 | 100.0 | --- | --- |
| Biotin | 0.01 | 0.01 | --- | --- |
| Nicotinic Acid | 1.0 | 1.0 | 0.5 | 0.5 |
| Pyridoxine | 1.0 | 1.0 | 0.1 | 0.1 |
| Thiamine | 1.0 | 1.0 | 0.1 | 0.1 |
| Glycine | -- | -- | 3.0 | 3.0 |
| Sucrose | 30.0g | 20.0g | 20.0g | 20.0g |
| pH | 5.8 | 5.8 | 6.0 | 6.0 |

---

[1]/     Unmodified Murashige Skoog solution

[2]/     This nutrient solution is one-half strength MS3 with three (3) times the half-strength amount of nitrogen (see Example II).

Table 2. Low-salt nutrient solutions for cultures using _Trifolium_ _incarnatum_ roots.

| Compound | MW1 (mg/1) | MW2 (mg/1) |
|---|---|---|
| $KNO_3$ | 80 | 320 |
| $Ca(NO_3)_2 \cdot 4H_2O$ | 300 | 1200 |
| $KCl$ | 65 | |
| $KH_2PO_4$ | 20 | 20 |
| $NaH$ $PO$ | – | – |
| $MgSo_4 \cdot 7H_2O$ | 720 | 720 |
| $Na_2So_4$ | 200 | 200 |
| $NaFe$ $EDTA$ | 36.7 | 36.7 |
| $H_3BO_3$ | 1.5 | 1.5 |
| $MnSO_4 \cdot H_2O$ | 5.3 | 5.3 |
| $ZnSO_4 \cdot 5H_2O$ | 3.0 | 3.0 |
| $CuSO_4 \cdot 5H_2O$ | 0.019 | 0.019 |
| $Na_2MoO_4 \cdot 2H_2O$ | 0.0025 | 0.0025 |
| $KI$ | 0.75 | 0.75 |
| Glycine | 3.0 | 3.0 |
| Nicotinic Acid | 0.5 | 0.5 |
| Pyridoxine | 0.1 | 0.1 |
| Thiamine HCl | 0.1 | 0.1 |
| Sucrose | 20.0g | 20.0g |
| pH | 5.5-6.5 | 5.5-6.5 |

Table 3. Peptone-yeast extract medium used to pregerminate spores of
Glomus spp. and Gigaspora spp.

| Component | g/l |
|---|---|
| Peptone[1] | 1.0 |
| Yeast Extract[2] | 0.2 |
| $MgSO_4 \cdot 7H_2O$ | 1.23 |
| $CaCl_2 \cdot 2H_2O$ | 0.015 |
| MOPS | 2.09 |

pH 6.5

[1]     Oxoid Bacteriological Peptone

[2]     Difco

Table 4. Volumes of porous substrate and nutrient solutions medium used per petri plate in establishing VAM root organ cultures.

| Substrate | Volume Substrate Per Plate (ml) | Volume Liquid Medium per Plate (ml) |
|---|---|---|
| Coarse Vermiculite (100%) | 55 | 30 |
| #8 Quartz Sand (100%) | 65 | 18 |
| Perlite ( 1mm; 100%) | 60 | 25 |
| Vermiculite-Perlite (50:50; V/V) | 60 | 25 |
| Vermiculite-Sand (50:50; V/V) | 60 | 22 |
| Vermiculite-Turface (80:20; V/V) | 60 | 30 |
| Vermiculite-Peat (95:5; V/V) | 55 | 30 |

Table 5. Effects of substrate type on VAM development of
Trifolium incarnatum root organ cultures inoculated with
Gigaspora margarita.

| Substrate | Root Biomass FW (mg) | No, Infections Per Culture | % Colonization | % Cultures Colonized | % Cultures Sporulating |
|---|---|---|---|---|---|
| Liquid | 500 ± 62 | 2 ± 2 | 0.5 ± 0.2 | 65 | 0 |
| Solid (Agar) | 462 ± 179 | 14 ± 12 | 1.3 ± 1.0 | 80 | 10 |
| Porous (Vermiculite) | 556 ± 146 | 49 ± 31 | 6.4 ± 3.7 | 100 | 100 |
| Porous (Vermiculite-Peat) | 678 ± 83 | 69 ± 23 | 10.3 ± 5.2 | 100 | 80 |

Table 6. Effect of nutrient solution composition on the growth colonization, and sporulation of Trifolium incarnatum root organ cultures inoculated with Gigaspora margarita.

| MS3 Strength | Level | Root Growth FW (mg) | % Colonization | Spores/Plate |
|---|---|---|---|---|
| 0.2 | 1.0 | 371 ± 76 | 13.3 ± 7.3 | 32 ± 23 |
|  | 2.0 | 471 ± 135 | 13.6 ± 6.6 | 31 ± 28 |
|  | 3.0 | 577 ± 198 | 24.2 ± 7.5 | 23 ± 20 |
| 0.5 | 1.0 | 800 ± 349 | 9.1 ± 6.1 | 27 ± 29 |
|  | 2.0 | 1280 ± 220 | 21.1 ± 3.8 | 83 ± 32 |
|  | 3.0 | 1433 ± 387 | 32.0 ± 11.8 | 73 ± 56 |
| 1.0 | 1.0 | 1623 ± 438 | 6.6 ± 4.6 | 28 ± 32 |
|  | 2.0 | 1886 ± 422 | 10.2 ± 3.6 | 25 ± 14 |
|  | 3.0 | 1839 ± 327 | 21.5 ± 7.8 | 32 ± 22 |
| 2.0 | 1.0 | 2268 ± 338 | 1.8 ± 1.8 | 4 ± 4 |
|  | 2.0 | 1897 ± 437 | 3.6 ± 2.3 | 1 ± 1 |
|  | 3.0 | 1582 ± 323 | 1.4 ± 1.3 | 0 ± 0 |

0209627

- 28 -

## CLAIMS

1.  A process for producing axenic vesicular arbuscular mycorrhizal fungi in association with root organ cultures on a porous medium comprising the steps of:

a)  applying a sterile nutrient solution to a sterile porous substrate to form a sterile porous medium;

b)  inoculating said porous medium with root inoculum, to form a root organ culture;

c)  inoculating said root organ culture with axenic pregerminated spores of a vesicular arbuscular mycorrhizal fungus; and

d)  incubating said spore inoculated root organ culture whereby an axenic vesicular-arbuscular mycorrhizal root organ culture is obtained.

2.  A process according to claim 1 for initiating successive axenic vesicular-arbuscular mycorrhizal root organ cultures comprising carrying out steps a), b), c) and d) followed by:

e)  harvesting said axenic vesicular arbuscular mycorrhizal root culture;

f)  layering said culture material into a fresh, sterile, porous medium; and

g)  incubating said root organ cultures;

whereby a successive axenic vesicular-arbuscular mycorrhizal fungus root culture is initiated.

3. A process according to claim 2 wherein said step of layering is followed by the step of overlaying said porous medium with fresh root organ cultures before incubating the root organ cultures.

4. A process for initiating a vesicular-arbuscular mycorrhizal association in whole plants comprising:

a) applying a sterile nutrient solution to a sterile porous substrate to form a sterile porous medium;

b) inoculating said porous medium with root inoculum, to form a root organ culture;

c) inoculating said root organ culture with axenic pregerminated spores of a vesicular arbuscular mycorrhizal fungus;

d) incubating said spore inoculated root organ culture until VAM associations have formed;

e) harvesting said VAM root organ culture; and

f) inoculating whole plants in a planting mix with said vesicular-arbuscular mycorrhizal root organ culture;

whereby vesicular-arbuscular mycorrhizas are initiated in whole plants.

5. A process according to claim 4 wherein said root organ culture is inoculated with a previously established axenic vesicular arbuscular mycorrhizal fungus root organ culture.

6. A process according to claim 4 or 5 wherein said whole plants are horticultural crops grown in green houses or nurseries.

7. A process according to any one of the preceding claims wherein the fungus is of the genera Glomus or Gigaspora.

8. A process according to claim 7 wherein the fungus is of the species Glomus etunicatum, Glomus mosseae, Glomus intraradicies or Gigaspora margarita.

9. A process according to any one of the preceding claims wherein the root inoculum is derived from a herbaceous plant.

10. A process according to claim 9 wherein the root inoculum is derived from Trifolium incarnatum.

11. A process according to claim 9 wherein the root inoculum is derived from Arachis hypogaea.

12. A process according to any one of the preceding claims wherein the porous substrate is capable of free gas diffusion and is wettable.

13. The process according to any one of claims 1, 2, 3, 4 or 11 wherein the nitrogen content of said nutrient solution is in the range of 250 mg/l to 500 mg/l concentration, the ionic strength is about 20 to 40 mM and the phosphorus concentration is in the range of about 5 to 15 mg/l.

14. The process according to any one of the preceding claims wherein said porous substrate is particulate.

15. A process according to any one of the preceding claims including the step of dividing the inoculated medium into sterilized plastic containers for incubation and growth of said axenic vesicular arbuscular mycorrhizal root organ culture.

16. An axenic vesicular-arbuscular mycorrhizal root organ culture comprising a porous substrate, a nutrient solution, axenic root inoculum, and pregerminated spores of a vesicular mycorrhizal fungus.

17. A culture according to claim 16 wherein said porous substrate is capable of free gas diffusion and is wettable.

18. A culture according to claims 16 or 17 wherein said porous substrate is particulate.

19. A culture according to any one of claims 16 to 18 wherein said particulate porous substrate is perlite, vermiculite, sand, peat, a granular montmorellinite clay preparation or a combination of said substrates.

20. A culture according to any one of claims 16 to 19 wherein said axenic root is derived from a herbaceous plant.

21. A culture according to claim 20 wherein said axenic root is derived from _Trifolium incarnatum_.

22. A culture according to claim 20 wherein said axenic root is derived from _Arachis hypogaea_.

23. A culture according to any one of claims 16 to 22 wherein the nitrogen content of said nutrient solution is in the range of 250 to 500 mg/l concentration, the ionic strength is about 20 to 40 mM and the phosphorus concentration is in the range of about 5 to 15 mg/l.

24. A nutrient solution for root organ culture having a nitrogen content in the range of 250 mg/l to 500 mg/l, the ionic strength is about 20 to 40 mM and the phosphorus concentration is in the range of 5 to 15 mg/l.

25. A nutrient solution comprising modified Murashige and Skoog medium having nitrogen in the range of 250 mg/l to 500 mg/l, the ionic strength is about 20 to 40 mM and the phosphorus concentration is in the range of 5 to 15 mg/l.

FIG. 1.

Fig.2